(19)

**Europäisches Patentamt**
**European Patent Office**
**Office européen des brevets**

(11) **EP 4 625 353 A1**

(12) **EUROPEAN PATENT APPLICATION**

(43) Date of publication:
01.10.2025 Bulletin 2025/40

(21) Application number: 25162718.8

(22) Date of filing: 10.03.2025

(51) International Patent Classification (IPC):
G06V 10/764 (2022.01)    G06V 10/774 (2022.01)
G06V 10/25 (2022.01)     G06V 10/46 (2022.01)
G06V 10/50 (2022.01)     G06V 10/74 (2022.01)
G06V 10/82 (2022.01)

(52) Cooperative Patent Classification (CPC):
G06V 10/82; G06V 10/25; G06V 10/46;
G06V 10/50; G06V 10/764; G06V 10/774;
G06V 10/74

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.03.2024 US 202463571404 P
09.10.2024 US 202418910907

(71) Applicant: Microsoft Technology Licensing, LLC
Redmond, WA 98052 (US)

(72) Inventors:
• HOFFMAN, Yonit
  Redmond, 98052 (US)
• STRUGO, Eliyahu
  Redmond, 98052 (US)

(74) Representative: CMS Cameron McKenna Nabarro
Olswang LLP
Cannon Place
78 Cannon Street
London EC4N 6AF (GB)

(54) **TRAINING A PRE-TRAINED OBJECT DETECTION MODEL FOR DETECTING NEW OBJECT CLASSES**

(57) Systems and methods are provided for implementing training of a pre-trained object detection model for detecting new object classes. In examples, to train an object detection model, which has been pre-trained with a first set of object classes, with a new object class, a computing system applies to each of a plurality of first images that each depicts an object corresponding to an object class among the first set of object classes, a set of data augmentations combining each first image with at least one second image among a plurality of second images that each depicts a second object corresponding to the new object class, to generate a plurality of augmented images. The computing system trains the object detection model using the plurality of augmented images. In examples, original weights corresponding to the first set of object classes are retained, while random weights are used for the new object class.

Fig. 1

EP 4 625 353 A1

Description

CROSS-REFERENCES TO RELATED APPLICATIONS

This application claims priority to U.S. Patent Application Ser. No. 63/571,404 (the " '404 Application"), filed March 28, 2024, by Yonit Hoffman et al. (attorney docket no. 501184-US01-PSP), entitled, "Training a Pre-Trained Object Detection Model for Detecting New Object Classes," the disclosure of which is incorporated herein by reference in its entirety for all purposes.

BACKGROUND

With advancements in artificial intelligence ("AI") technologies, particularly with respect to object detection, image generation, or video generation, object detection models must continually be updated or trained to detect new classes of objects. It is with respect to this general technical environment to which aspects of the present disclosure are directed. In addition, although relatively specific problems have been discussed, it should be understood that the examples should not be limited to solving the specific problems identified in the background.

SUMMARY

This summary is provided to introduce a selection of concepts in a simplified form that are further described below in the detailed description section. This summary is not intended to identify key features or essential features of the claimed subject matter, nor is it intended as an aid in determining the scope of the claimed subject matter. Systems and methods are provided for implementing training of a pre-trained object detection model for detecting new object classes. In examples, to train an object detection model, which has been pre-trained with a first set of object classes, with a new object class, a computing system applies to each of a plurality of first images that each depicts an object corresponding to an object class among the first set of object classes, a set of data augmentations combining each first image with at least one second image among a plurality of second images that each depicts a second object corresponding to the new object class, to generate a plurality of augmented images. The computing system trains the object detection model using the plurality of augmented images. In examples, original weights corresponding to the first set of object classes are retained, while random weights are used for the new object class.

The currently disclosed technology, among other things, provides for training a pre-trained (also referred to as an "existing") object detection model for detecting new object classes. In examples, to train an object detection model, which has been pre-trained with a first set of object classes, with a new object class, a computing system applies to each of a plurality of first images that each depicts an object corresponding to an object class among the first set of object classes, a set of data augmentations combining each first image with at least one second image among a plurality of second images that each depicts a second object corresponding to the new object class, to generate a plurality of augmented images. The computing system trains the object detection model using the plurality of augmented images.

The details of one or more aspects are set forth in the accompanying drawings and description below. Other features and advantages will be apparent from a reading of the following detailed description and a review of the associated drawings. It is to be understood that the following detailed description is explanatory only and is not restrictive of the invention as claimed.

BRIEF DESCRIPTION OF THE DRAWINGS

A further understanding of the nature and advantages of particular embodiments may be realized by reference to the remaining portions of the specification and the drawings, which are incorporated in and constitute a part of this disclosure.

Fig. 1 depicts an example system for implementing training of a pre-trained object detection model for detecting new object classes.

Fig. 2A depicts an example sequence flow for implementing automatic labeling that may be used for training of a pre-trained object detection model for detecting new object classes.

Figs. 2B and 2C depict various example labeling results from two different object detection or classifier models that are used for automatic labeling that may be used when implementing training of a pre-trained object detection model for detecting new object classes.

Figs. 3A and 3B depict various example sequence flows and corresponding resultant augmented images for corresponding data augmentation that may be used when implementing training of a pre-trained object detection model for detecting new object classes.

Figs. 4A and 4B depict an example method for implementing training of a pre-trained object detection model for detecting new object classes and for implementing detection of objects in images (at inference time) using the trained object detection model, respectively.

Fig. 5 depicts a block diagram illustrating example physical components of a computing device with which aspects of the technology may be practiced.

## DETAILED DESCRIPTION OF CERTAIN EMBODIMENTS

Having a model to detect a closed set of objects (e.g., an object detection model) is a common component in image or video projects, and is a common proprietary component of AI companies. Adding a new object class to a pre-trained model, however, is a complex problem not solved in the literature. The main problem with this task is a phenomenon called "catastrophic forgetting," where the model "forgets" the old object classes, and becomes worse at detecting them, while adding and training new object classes. For example, for a model that is pre-trained to detect chairs, simply providing the model with new data with labeling of a dog, without using the techniques described herein, would result in the model becoming worse over time at detecting chairs. This is different from the task of taking a pre-trained model architecture and training it to detect a new object class without maintaining the old object classes, which is a common technique that works well with existing solutions.

Although it is possible to erase the weights in the model and to restart training of the model with both the old object classes and the new object class(es), this is an expensive endeavor that is also time-consuming, and also unscalable. This approach also obviates the point of pre-trained models, where the weights have already acquired meaning. Also, after having been trained on a number of graphics processing units ("GPUs") for a long time with a large set of data to learn features, combinations, and how objects look in general and how specific objects look, restarting training of the model by erasing the weights results in wasted time and resources.

In an object detection model, a model architecture includes a backbone and a head. The "head" in an object detection model refers to the part of the network that processes the features extracted by the "backbone" (the feature extraction network) to make predictions about object classes and locations. Specifically, the head uses the aggregated features from the backbone's feature maps to predict the classes and bounding boxes of objects based on these features. Adding a new head to the model creates a double headed model, with one head predicting the old object classes and the new head predicting the new object class(es). The disadvantages of this architecture are that it is not scalable (e.g., for each class, another head is needed, which results in an increasingly bigger architecture as new object classes are added, and takes time to run), and it only allows for training the new head without the backbone (as the backbone relates to the old head as well). Because the backbone is responsible for learning the features of the image in relation to the trained classes, the model cannot learn new features for the new object classes when only training the new head. Another problem is the disconnection between the new and old object classes. An important element in an object detection model is its ability to learn to differentiate between object classes that are close to one another by learning the relationship(s) between them (e.g., handgun and cellphone, which are both metal elements held by hand). With a new head, the relationship between the old and new object classes are not learned, which results in lower performance for both sets of object classes.

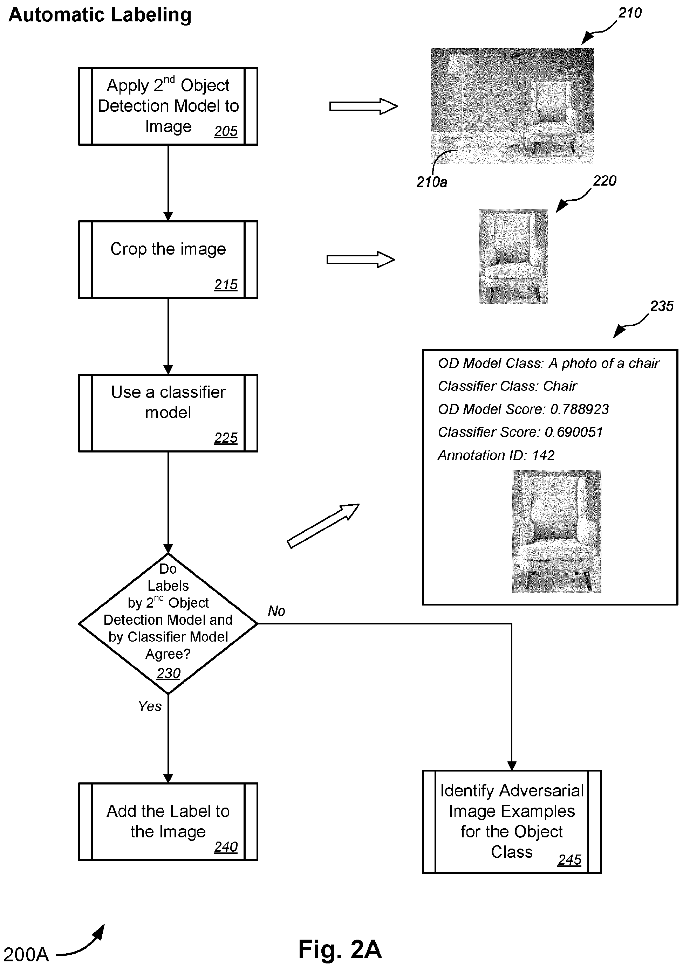

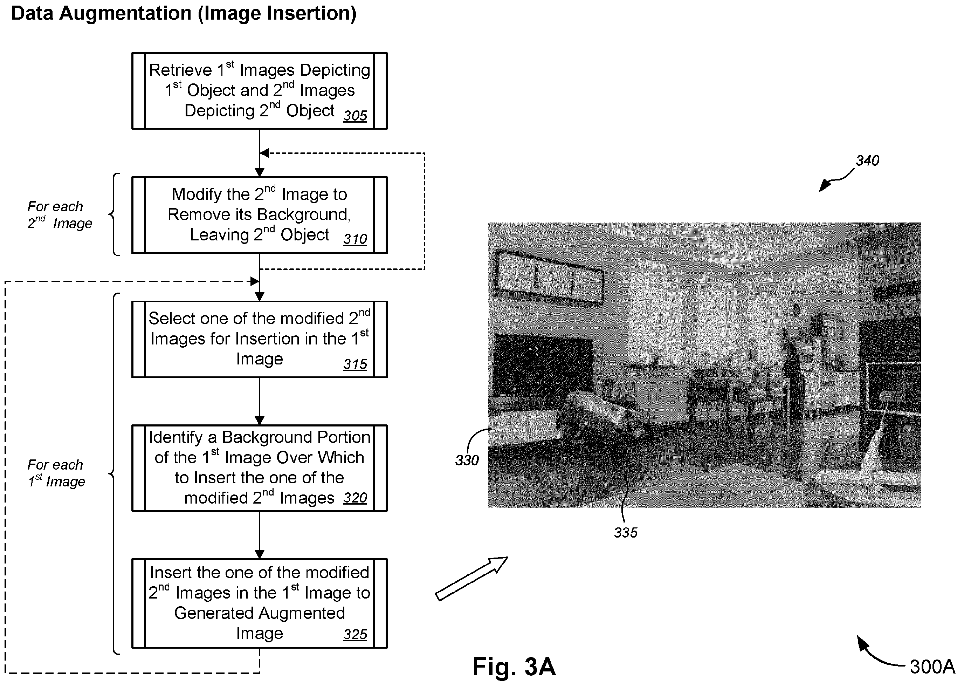

The present technology is a technique that overcomes the catastrophic forgetting phenomenon without erasing the model's existing architecture and without need of a full (and expensive) retraining. The technique as described herein maintains a small, efficient, and scalable process for adding a new object class to an existing set of object classes in the object detection model. In examples, a small portion of the original training dataset (e.g., the dataset used for training objects corresponding to the old object classes) is combined with new data corresponding to a new object class using a combination of automatic labeling and data augmentation as described in detail with respect to Figs. 2A-2C, and 3A-3B, respectively. For training, original weights of the original connections for the pre-trained object detection model are retained when changing the architecture to add the new class to the head, while using random weights for the new connections for the new class in the head. Alternatively or additionally, the backbone may be trained by freezing pre-trained weights corresponding to the old object classes and storing, in a matrix, additional weight changes corresponding to each new object class. To add the new object class, the additional weight changes (e.g., the difference or delta) are added to the pre-trained weights.

Various modifications and additions can be made to the embodiments discussed without departing from the scope of the disclosed techniques. For example, while the embodiments described above refer to particular features, the scope of the disclosed techniques also includes embodiments having different combinations of features and embodiments that do not include all of the above-described features.

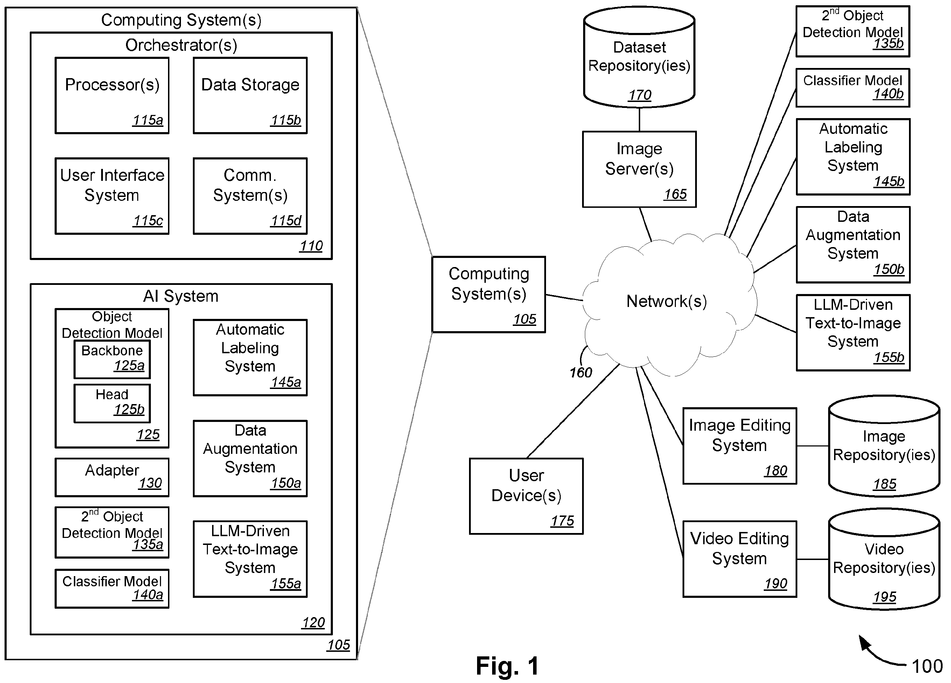

We now turn to the embodiments as illustrated by the drawings. Figs. 1-5 illustrate some of the features of a method, system, and apparatus for implementing object detection, and, more particularly, to methods, systems, and apparatuses for implementing training of a pre-trained object detection model for detecting new object classes, as referred to above. The methods, systems, and apparatuses illustrated by Figs. 1-5 refer to examples of different embodiments that include various components and steps, which can be considered alternatives or which can be used in conjunction with one another in the various embodiments. The description of the illustrated methods, systems, and apparatuses shown in Figs. 1-5 is provided for purposes of illustration and should not be considered to limit the scope of the different embodiments.

Fig. 1 depicts an example system 100 for implementing training of a pre-trained object detection model for detecting new object classes. System 100 includes a computing system 105. In some examples, computing system 105 includes orchestrator 110, which may include at least one of one or more processors 115a, a data storage device 115b, a user interface ("UI") system 115c, and/or one or more communications systems 115d. In some cases, computing system 105 may further include artificial intelligence ("AI") system 120 that trains and uses an object detection model 125, which is a model that has a general architecture including a backbone portion 125a and a head portion 125b. The backbone portion 125a is configured to detect or identify (in some cases, to compute) general features in an image and to generate a numerical representation for each general feature, while the head portion 125b is configured to perform at least one of classification, confidence determination, and/or bounding box detection, in some cases, based on the numerical representation for each general feature. In examples, object detection model 125 includes a You Only Look Once ("YOLO" or "YOLOX") convolutional neural network ("CNN") -based model, a Region-Based Convolutional Neural Networks ("R-CNNs") -based model, a Scale-Invariant Feature Transform ("SIFT") -based model, or Histogram of Oriented Gradients ("HOG") -based model. In other examples, the object detection model 125 includes any suitable neural network that has a backbone portion and a head portion as described above. In yet other examples, the object detection model 125 includes any suitable neural network or machine learning ("ML") model that is configured to perform object detection.

The AI system 120 may further use an adapter 130 to train at least the backbone portion 125a. Based on low-rank adaptation ("LoRA") of large language models ("LLMs"), which is a technique that works with transformer-based models and is not typically used in object detection architectures, the adapter 130 is configured to function within the architecture of the object detection model 125, and is further configured to freeze pre-trained weights corresponding to a first set of object classes (also referred to as "old object classes") on which the object detection model 125 has previously been trained and to store, in a matrix, additional weight changes corresponding to each new object class on which the object detection model 125 is being trained. An alternative to use of LoRA is weight-decomposed low-rank adaptation ("DoRA"). DoRA and LoRA each removes the need to fully train the model for new data. By adding the difference (or delta) between the pre-trained weights and the new weights (e.g., the additional weight changes) to the pre-trained weights, the object detection model 125 can be trained with both the old object classes and each new object class, while avoiding the issues with conventional techniques for training object detection models with new object classes. In an alternative implementation, the additional weight changes may be kept separate and may be activated and added to the object detection model when a user requests the new object class predictions. In this way, the new classes only change the original model when needed, and can be customizable for each user/client. This approach may also be used for different domains. For example, an object detection model that is oriented for a specific domain such as security cameras may be trained with this approach on top of a regular object detection model, and the additional weight changes may be used only when needed in this domain. As discussed above, issues with conventional training techniques include the catastrophic forgetting problem or having to train the object detection model from scratch with both the old object classes and the new object class(es). As used herein, an LLM refers to a machine learning model that is trained and fine-tuned on a large corpus of media (e.g., text, audio, video, or software code), and that can be accessed and used through an application programming interface ("API") or a platform. An LLM performs a variety of tasks, including generating and classifying media, answering user requests and questions in a conversational manner, and translating text from one language to another. Examples of LLMs (or more generally language models ("LMs")) include Bidirectional Encoder Representations from Transformers ("BERT"), Word2Vec, Global and Vectors ("GloVe"), Embeddings from Language Models ("ELMo"), XLNet, Generative Pre-trained Transformer ("GPT")-3 or GPT-4, Large Language Model Meta AI ("LLaMA") 2, or BigScience Large Open-science Open-access Multilingual Language Model (BLOOM).

In examples, the AI system 120 may further use a second object detection model 135a and/or a classifier model 140a. The second object detection model 135a may include a large object detection model that is configured to detect and label objects corresponding to pre-trained classes. Although time consuming, when used offline or prior to training the object detection model 125, the second object detection model 135a may be used to generate a large number (e.g., hundreds, thousands, tens of thousands, hundreds or thousands, or millions, or more) of labeled results that may then be used for training the object detection model 125. In an example, the classifier model 140a includes a contrastive language-image -based model (e.g., Contrastive Language-Image Pre-training ("CLIP")) that is trained on a large-scale dataset containing images and their corresponding textual descriptions and that is configured to handle classification of a closed set of classes. In another example, the classifier model 140a includes a classification model that is finetuned on crops of a labeled dataset of objects (e.g., the Common Objects in Context ("COCO") dataset). The classifier model 140a provides a second set of labeled results.

In examples, the AI system 120 uses one or a combination of automatic labeling system 145a, data augmentation system 150a, and/or LLM-driven text-to-image system 155a (also referred to as "LLM-driven text-to-image retrieval system," "LLM-driven text-to-image generation system," or "LLM-driven text-to-image retrieval or generation system").

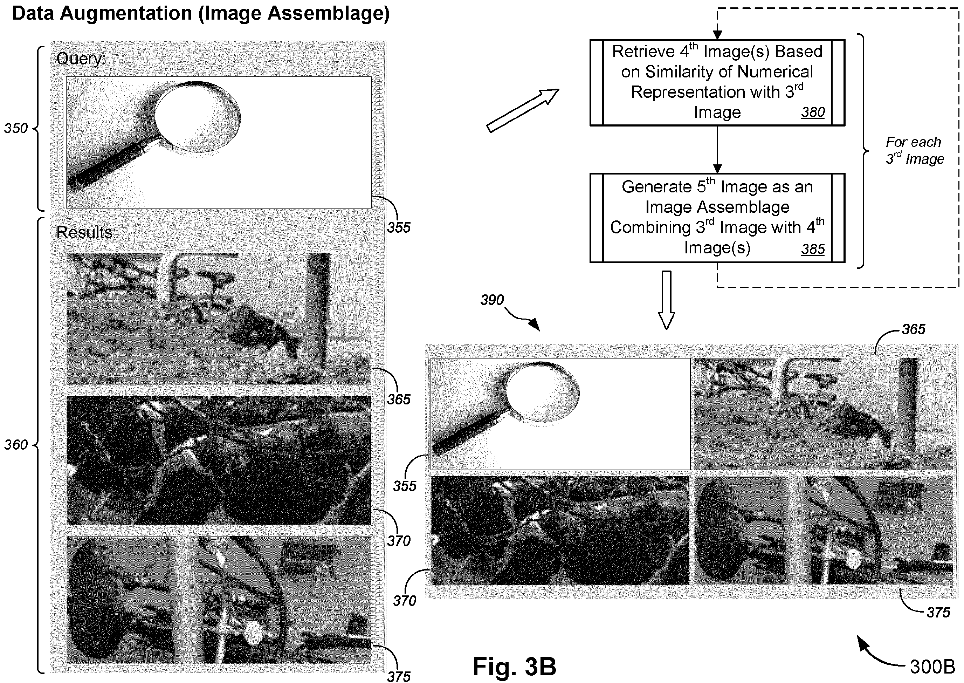

The automatic labeling system 145a uses a combination (or consensus) of the second object detection model 135a and the classifier model 140a to automatically label objects or images for autonomously producing a large number of labeled results that may then be used for training the object detection model 125, as described in detail below with respect to Figs. 2A-2C. Consensus, as used herein, refers to agreement on a prediction by the two models (in this case, by the second object detection model 135a and the classifier model 140a) for automatically labelling objects or images. The data augmentation system 150a is configured to perform one of or a combination of two or more of (a) numerical representation similarity -based data augmentations; (b) image insertion -based data augmentations (as shown and described below with respect to Fig. 3A); and/or (c) image assemblage -based data augmentations (as shown and described below with respect to Fig. 3B). In some cases, numerical representation similarity -based data augmentations may be used as part of one or both of the image insertion -based data augmentations and/or image assemblage -based data augmentations, as described below. In some instances, the image assemblage -based data augmentations may use images that are either retrieved or generated by the LLM-driven text-to-image system 155a, as described below.

In some examples, the second object detection model 135a, the classifier model 140a, the automatic labeling system 145a, the data augmentation system 150a, and/or the LLM-driven test-to-image system 155a may be part of or local to the AI system 120 or the computing system 105. In other examples, one or more of the second object detection model 135a, the classifier model 140a, the automatic labeling system 145a, the data augmentation system 150a, and/or the LLM-driven test-to-image system 155a may be located in or accessible via network(s) 160 as the second object detection model 135b, the classifier model 140b, the automatic labeling system 145b, the data augmentation system 150b, and/or the LLM-driven test-to-image system 155b, respectively. Network(s) 160 may each include at least one of a distributed computing network, such as the Internet, a private network, a commercial network, or a cloud network, and/or the like.

System 100 may further include image server(s) 165 and corresponding dataset repository(ies) 170, either or both of which the computing system 105, orchestrator(s) 110, and/or AI system 120 may access, prompt, or query to retrieve images (whether labeled or not yet labeled) and/or datasets of such images for training the object detection model 125. System 100 may further include user device(s) 175, with which a user may use to provide inputs or commands to control the computing system 105, orchestrator(s) 110, and/or AI system 120 to use or train the object detection model 125. The trained object detection model 125 may be used in either or both of image editing system 180 or video editing system 190 with results of labeled objects corresponding to both the old object classes and the new object class(es) being stored in image repository(ies) 185 or video repository(ies) 195, respectively. In examples, the image editing system 180 and/or the video editing system 190 is accessible via network(s) 160.

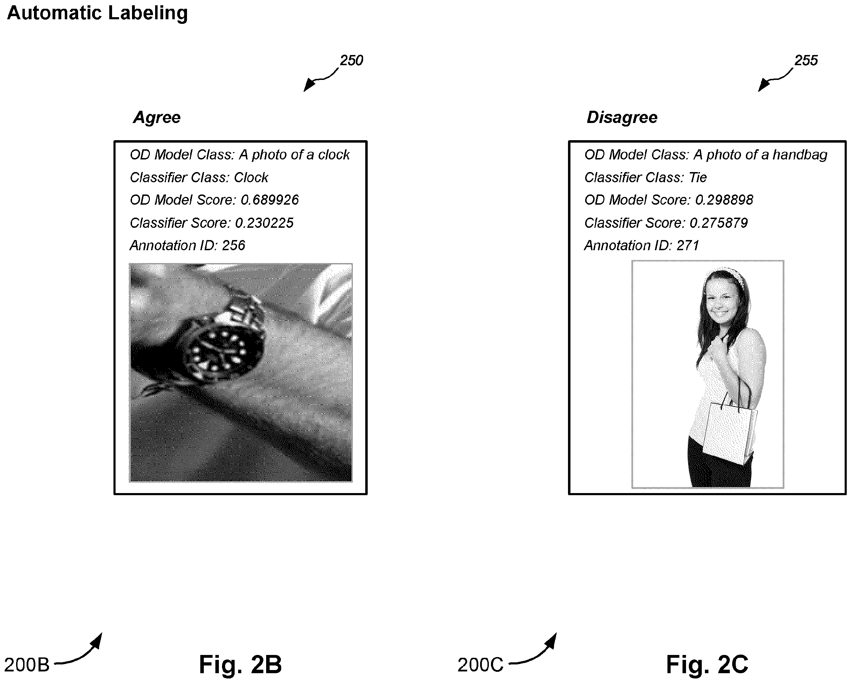

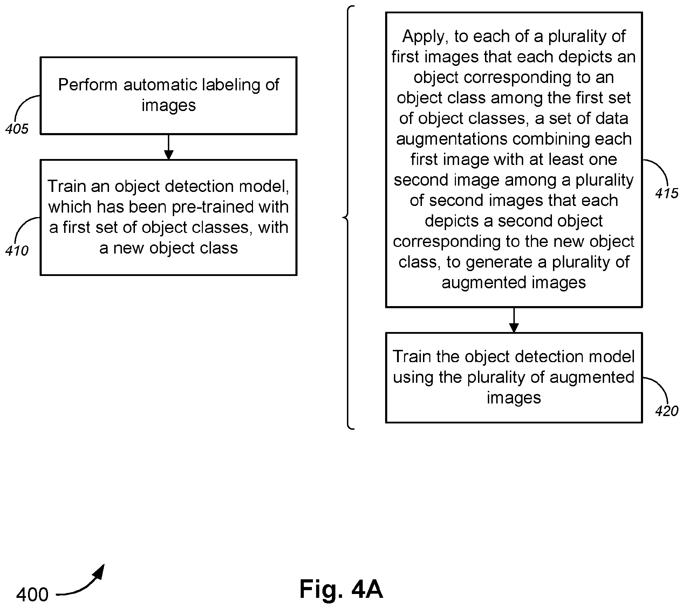

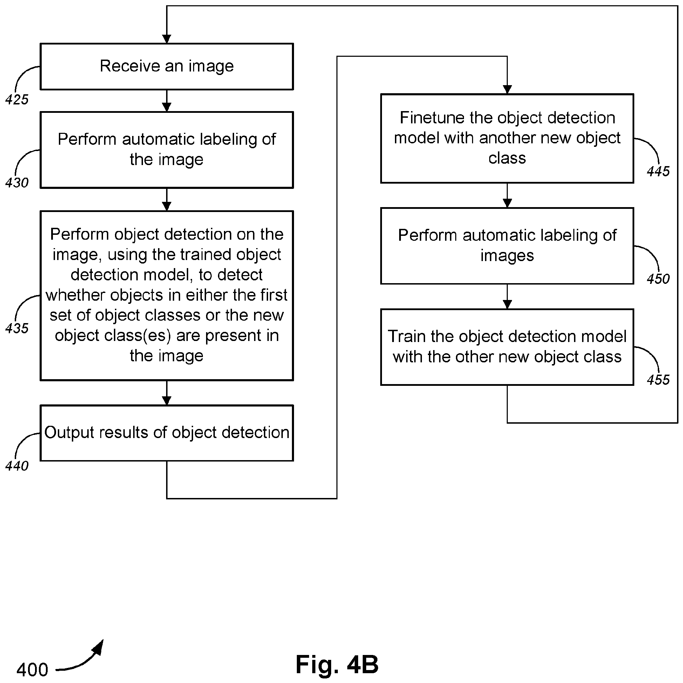

In operation, computing system(s) 105, orchestrator(s) 110, and/or AI system 120 may perform methods for implementing training of a pre-trained object detection model for detecting new object classes, as described in detail with respect to Figs. 2-4. For example, example sequence flow 200A as described below with respect to Fig. 2A illustrates automatic labeling that may be used for training the object detection model, while Figs. 2B and 2C depict various example labeling results 200B and 200C, respectively that may be used for automatic labeling. Example sequence flows 300A and 300B as described below with respect to Figs. 3A and 3B, respectively, illustrate data augmentation that may be used for training the object detection model for detecting new object classes. Example sequence flow 200A of Fig. 2A, example sequence flows 300A and 300B of Figs. 3A and 3B, and example method 400 as described below with respect to Fig. 4 may be applied with respect to the operations of system 100 of Fig. 1.

Figs. 2A-2C are directed to automatic labeling. Fig. 2A depicts an example sequence flow 200A for implementing automatic labeling that may be used for training of a pre-trained object detection model for detecting new object classes. Figs. 2B and 2C depict various example labeling results 200B and 200C, respectively, from two different object detection or classifier models that are used for automatic labeling that may be used when implementing training of a pre-trained object detection model for detecting new object classes.

With reference to Fig. 2A, example sequence flow 200A includes operations for performing automatic labeling of images (e.g., using automatic labeling system 145a or 145b of Fig. 1), that may be used when training an object detection model (e.g., object detection model 125 of Fig. 1), which has been pre-trained with a first set of object classes, with a new object class. The images on which automatic labeling may be performed may include at least one of a plurality of first images that each depicts an object corresponding to an object class among the first set of object classes or a plurality of second images that each depicts a second object corresponding to the new object class.

In examples, sequence flow 200A includes, for each object class for each image, applying a second object detection model (e.g., second object detection model 135a or 135b of Fig. 1) to the image (in this case, image 210) to detect and to label an object corresponding to the object class (at operation 205). Labeling results by the second object detection model may be as depicted by bounding box 210a as shown, e.g., in Fig. 2A. Sequence flow 200A further includes, at operation 215, cropping the image, leaving the object depicted in the image, as depicted by image 220 in Fig. 2A. At operation 225, sequence flow 200A further includes using a classifier model to detect and to label an object in the cropped image. In some examples, the classifier model includes one of a contrastive language-image -based model (e.g., CLIP) that is trained on a large-scale dataset containing images and their corresponding textual descriptions and that is configured to handle classification of a closed set of classes; or a classification model that is finetuned on crops of a labeled dataset of objects (e.g., the COCO dataset).

At operation 230, sequence flow 200A includes determining whether labels by the second object detection model and by the classifier model agree, in some cases using results as compiled in annotation results 235. As shown in Fig. 2A, annotation results 235 depict results of classification by each of the two models or classifiers (in this case, "a photo of a chair" (by the second object detection model) and "chair" (by the classifier model)), classification scores by each model or classifier (in this case, "0.788923" (for the second object detection model) and "0.690051" (for the classifier model)), and annotation identifier ("ID") (in this case, "142"). In some examples, the annotation results 235 includes a display of the image of interest (in this case, image 220). Based on a determination that the labels by the second object detection model and by the classifier model agree within a natural language tolerance, the label is added to the image (at operation 240). Alternatively, based on a determination that the labels by the second object detection model and by the classifier model do not agree within the natural language tolerance, adversarial image examples for the object class are identified (at operation 245). As used herein, "natural language tolerance" may refer to a level of semantic similarity between natural language words or phrases. To determine semantic similarity or natural language tolerance, an object detection model (e.g., the first or second object detection model described above) assigns probabilities to each detected object based on a predefined set of class indices (e.g., "0" for person, etc.). The object detection model does not recognize the class labels directly, but rather uses the index in the labels set. On the other hand, a classifier model (e.g., a CLIP-based classifier model) uses both a vision encoder and a text encoder to process images and corresponding text descriptions (like "a photo of a dog"). Each input is converted into embedding vectors. The semantic similarity between the image and the text is then calculated using cosine similarity between these vectors, and enables assessment as to whether the labels from both models agree within a certain tolerance level or confidence level. Additionally, these similarity scores can be transformed into probabilities using the softmax function for a more intuitive understanding of model agreement (with scores ranging from 0 to 1 for both the object detection model and the classifier). The softmax function is as follows:

$$P(text_i|image) = \frac{e^{cosine\_similarity(image,text_i)}}{\sum_j e^{cosine\_similarity(image,text_j)}}. \qquad \text{(Eqn. 1)}$$

If the object detection model identifies an object as a "dog," the CLIP model will compare this to similar descriptions, such as "a photo of a dog" and "a photo of a canine." Both descriptions should be close to the image of a dog in vector space, highlighting the model's ability to handle synonyms and closely related terms effectively. In the case as shown in Fig. 2A, due to the two models or classifiers agreeing with respect to classification (in this case, "chair") and having moderately high scores (in this case, greater than "0.6"), the label of "chair" may be added to the image (e.g., image 210 and/or image 220).

Other annotation results 250 and 255 are shown in example labeling results 200B and 200C of Figs. 2B and 2C, respectively, with the former showing an example of agreement by the two models or classifiers, while the latter shows an example of disagreement by the two models or classifiers. As shown in Fig. 2B, annotation results 250 depict results of classification by each of the two models or classifiers (in this case, "a photo of a clock" (by the second object detection model) and "clock" (by the classifier model)), classification scores by each model or classifier (in this case, "0.689926" (for the second object detection model) and "0.230225" (for the classifier model)), and annotation ID (in this case, "256"). In some examples, the annotation results 250 includes a display of the image of interest (in this case, an image of a wristwatch worn on a wrist of a person). Due to the two models or classifiers agreeing with respect to classification (in this case, "clock"), the label of "clock" may be added to the image.

As shown in Fig. 2C, annotation results 255 depict results of classification by each of the two models or classifiers (in this case, "a photo of a handbag" (by the second object detection model) and "tie" (by the classifier model)), classification scores by each model or classifier (in this case, "0.298898" (for the second object detection model) and "0.275879" (for the classifier model)), and annotation ID (in this case, "271"). In some examples, the annotation results 255 includes a display of the image of interest (in this case, an image of a girl with a paper bag on her arm). Based on a determination that the labels by the second object detection model and by the classifier model do not agree within a natural language tolerance, neither label is added to the image. In some cases, adversarial image examples for the object class may be identified.

Figs. 3A and 3B depict various example sequence flows 300A and 300B and corresponding resultant augmented images for corresponding data augmentation that may be used when implementing training of a pre-trained object detection model for detecting new object classes. In particular, example sequence flow 300A in Fig. 3A corresponds to image insertion - based data augmentations, while example sequence flow 300B in Fig. 3B corresponds to image assemblage -based data augmentations.

In examples, referring to Fig. 3A, sequence flow 300A includes applying the image insertion -based data augmentations, which includes, at operation 305, retrieving a plurality of first images each depicting a first object corresponding to a set of object classes on which the object detection model has been pre-trained and a plurality of second images each depicting a second object corresponding to a new object class. For each of the plurality of second images, sequence flow 300A further includes, at operation 310, modifying the second image to remove its background, leaving the second object depicted in the second image (and in some cases, repeating operation 310 for the other second images of the plurality of second images, as denoted by short-dashed arrow forming a loop including operation 310).

For each first image of the plurality of first images, sequence flow 300A further includes selecting one of the modified second images for insertion in the first image (at operation 315); identifying a background portion of the first image over which to insert the one of the modified second images (at operation 320); and inserting the one of the modified second images in the first image to overlay the identified background portion of the first image to generate one of the plurality of augmented images (at operation 325). In some cases, selecting the one of the modified second images (at operation 315) may be based on a similarity between a numerical representation of the one of the modified second images and a numerical representation of the first image. In some cases, operations 315-325 may be repeated for the other first images of the plurality of first images, as denoted by long-dashed arrow forming a loop from operation 325 back to operation 315 and through operations 315-325. An example augmented image 340 is shown in Fig. 3A, in which a modified second image 335 (in this case, an image of a bear without its original background) is inserted in a background portion of the first image 330 (in this case, an image of living space in a residential building).

In examples, turning to Fig. 3B, sequence flow 300B includes applying the image assemblage -based data augmentations, which includes, for each third image of the plurality of third images, retrieving at least one fourth image based on a similarity between a numerical representation of each of the at least one fourth image and a numerical representation of the third image (at operation 380). At operation 385, sequence flow 300B includes generating a fifth image as an image assemblage that combines the third image with the at least one fourth image. In some examples, operations 380 and 385 may be repeated for the other third images of the plurality of third images, as denoted by long-dashed arrow forming a loop from operation 385 back to operation 380 and through operations 380 and 385.

In some cases, retrieving at least one fourth image (at operation 380) includes, for each third image, generating a first prompt including the third image; providing the first prompt to an LLM-driven text-to-image retrieval system or an LLM-driven text-to-image generation system (e.g., LLM-driven text-to-image system 155a or 155b of Fig. 1); and receiving, from the LLM-driven text-to-image retrieval system or the LLM-driven text-to-image generation system, the at least one fourth image. An example query or prompt 350 is shown in Fig. 3B, in which image 355 (in this case, an image of a magnifying glass) is provided as input to the LLM-driven text-to-image retrieval or generation system. Results 360 from the LLM-driven text-to-image retrieval or generation system may include images 365-375 (in this case, images of bicycles 365 and 375, and an image of cows 370). The images 355 and 365-375 may be combined as image assemblage 390. In an example, the image assemblage 390 may include one of a collage of images, a montage using multiple images, or a mosaic using at least portions of multiple images. During training, based on a determination that the at least one fourth image depicts objects that are not the object of interest in the third image, the at least one fourth image may be labeled as being not the object of interest (in the case of Fig. 3B, images 365-375 may each be labeled as "not a magnifying glass" for training purposes).

Although Figs. 2A-3B depict images of particular objects, the various embodiments are not so limited, and the images that are used for training the object detection model may include any suitable images of any suitable objects.

Figs. 4A and 4B depict an example method 400 for implementing training of a pre-trained object detection model for detecting new object classes and for implementing detection of objects in images (at inference time) using the trained object detection model, respectively. With reference to Fig. 4A, method 400, at operation 405, includes performing automatic labeling of images (in some cases, using automatic labeling system 145a or 145b of Fig. 1), which is described above with respect to Fig. 2A. At operation 410, method 400 includes training an object detection model (e.g., object detection model 125 of Fig. 1), which has been pre-trained with a first set of object classes, with a new object class. In examples, training the object detection model (at operation 410) includes applying, to each of a plurality of first images that each depicts an object corresponding to an object class among the first set of object classes, a set of data augmentations to generate a plurality of augmented images (at operation 415) and training the object detection model using the plurality of augmented images (at operation 420). In some examples, training the object detection model (at operation 410) further includes retaining weights associated with the first set of object classes and randomizing weights of the new object class. In examples, training the object detection model (at operation 410) includes training at least a backbone of the object detection model (e.g., backbone 125a of Fig. 1) using an adapter (e.g., adapter 130 of Fig. 1) that freezes pre-trained weights corresponding to the first set of object classes and stores additional weight changes corresponding to the new object class in a matrix.

In some examples, the set of data augmentations combine each first image with at least one second image among a plurality of second images that each depicts a second object corresponding to the new object class. In some examples, the set of data augmentations includes one of or a combination of two or more of: numerical representation similarity -based data augmentations; image insertion -based data augmentations; or image assemblage -based data augmentations. Image insertion -based data augmentations are as described above with respect to Fig. 3A, while image assemblage -based data augmentations are as described above with respect to Fig. 3B, and numerical representation similarity -based data augmentations may be part of one or both of the image insertion -based data augmentations of Fig. 3A and/or the image assemblage -based data augmentations of Fig. 3B.

In examples, applying the numerical representation similarity -based data augmentations includes selecting the at least one second image based on a similarity between a numerical representation of each of the at least one second image and a numerical representation of each first image. In some instances, each numerical representation is representative of at least one of color, texture, contrast, brightness, or pixel values. Applying the numerical representation similarity -based data augmentations further includes combining each first image with at least one second image based on numerical representation-based selection of images to generate the plurality of augmented images.

In some examples, applying the image insertion -based data augmentations (with reference to the example of Fig. 4) includes retrieving a plurality of third images that depict the second object corresponding to the new object class, the plurality of third images including the plurality of second images. For each of the plurality of third images, applying the image insertion -based data augmentations further includes modifying the third image to remove its background, leaving the second object depicted in the third image. For each first image of the plurality of first images, applying the image insertion -based data augmentations further includes selecting one of the modified third images for insertion in the first image based on a similarity between a numerical representation of the one of the modified third images and a numerical representation of the first image; identifying a background portion of the first image over which to insert the one of the modified third images; and inserting the one of the modified third images in the first image to overlay the identified background portion of the first image to generate one of the plurality of augmented images.

In examples, applying the image assemblage -based data augmentations (referring to the example of Fig. 4) includes, for each first image of the plurality of first images, retrieving at least one fourth image among the plurality of second images based on a similarity between a numerical representation of each of the at least one fourth image and a numerical representation of the first image; and generating a fifth image as an image assemblage that combines the first image with the at least one fourth image. In some cases, retrieving at least one fourth image includes, for each first image, generating a first prompt including the first image; providing the first prompt to an LLM-driven text-to-image retrieval system or an LLM-driven text-to-image generation system (e.g., LLM-driven text-to-image system 155a or 155b of Fig. 1); and receiving, from the LLM-driven text-to-image retrieval system or the LLM-driven text-to-image generation system, the at least one fourth image.

Referring to Fig. 4B, at inference time, method 400, at operation 425, includes receiving an image. Method 400 further includes performing automatic labeling of the image (at operation 430), similar to the automatic labeling performed at operation 405 in Fig. 4A. At operation 435, method 400 includes performing object detection on the image, using the trained object detection model (from either operation 410 in Fig. 4A or operation 455 below), to detect whether objects in either the first set of object classes or the new object class(es) are present in the image. Method 400 further includes, at operation 440, outputting results of object detection. In some cases, bounding boxes may be generated and displayed to highlight the detected objects in the image, in some cases with annotation indicating class of object near each bounding box. In another example, the class of object for each detected object is displayed on a display screen.

In examples, method 400 may further include, at operation 445, finetuning the object detection model with another new object class. Method 400, at operation 450, includes performing automatic labeling of images, similar to the automatic labeling performed at operation 405 in Fig. 4A. At operation 455, method 400 includes training the object detection model with the other new object class, in a manner similar to the process at operations 410-420 in Fig. 4A. Method 400 may subsequently repeat the processes at operations 425-440 and/or 425-455.

While the techniques and procedures in method 400 are depicted and/or described in a certain order for purposes of illustration, it should be appreciated that certain procedures may be reordered and/or omitted within the scope of various embodiments. Moreover, while the method 400 may be implemented by or with (and, in some cases, are described below with respect to) the systems, examples, or embodiments 100, 200A, 200B, 200C, 300A, and 300B of Figs. 1, 2A, 2B, 2C, 3A, and 3B, respectively (or components thereof), such methods may also be implemented using any suitable hardware (or software) implementation. Similarly, while each of the systems, examples, or embodiments 100, 200A, 200B, 200C, 300A, and 300B of Figs. 1, 2A, 2B, 2C, 3A, and 3B, respectively (or components thereof), can operate according to the method 400 (e.g., by executing instructions embodied on a computer readable medium), the systems, examples, or embodiments 100, 200A, 200B, 200C, 300A, and 300B of Figs. 1, 2A, 2B, 2C, 3A, and 3B can each also operate according to other modes of operation and/or perform other suitable procedures.

As should be appreciated from the foregoing, the present technology provides multiple technical benefits and solutions to technical problems. For instance, training an existing object detection model for new classes generally raises multiple technical problems. For example, simply adding new data of a new object class to a pre-trained object detection model may result in "catastrophic forgetting" in which the old object classes are forgotten in lieu of the new object class. An alternative approach in which the weights of the object detection model are erased and the object detection model is trained from scratch to detect both the old object classes and the new object class results in an expensive, time-consuming, and unscalable endeavor that wastes the time and resources used for the original training. Another technical problem arises with training using multiple heads, one head for the old object classes and another head for each new object class. In this scenario, a disconnection occurs between the new and old object classes, where the relationships between the two sets of classes are not learned, which results in lower performance for both. The present technology provides for training of a pre-trained object detection model for detecting new object classes. In examples, to train an object detection model, which has been pre-trained with a first set of object classes, with a new object class, a computing system applies to each of a plurality of first images that each depicts an object corresponding to an object class among the first set of object classes, a set of data augmentations combining each first image with at least one second image among a plurality of second images that each depicts a second object corresponding to the new object class, to generate a plurality of augmented images. The computing system trains the object detection model using the plurality of augmented images. For training, original weights of the original connections for the pre-trained object detection model are retained when changing the architecture to add the new class to the head, while using random weights for the new connections for the new class in the head. Alternatively or additionally, the backbone may be trained by freezing pre-trained weights corresponding to the old object classes and storing, in a matrix, additional weight changes corresponding to each new object class. To add the new object class, the additional weight changes (e.g., the difference or delta) are added to the pre-trained weights. In this manner, the catastrophic forgetting phenomenon is overcome without erasing the model's existing architecture and without need of a full (and expensive) retraining. A small, efficient, and scalable process for adding a new object class to an existing set of object classes in the object detection model is thus achievable using the techniques described herein.

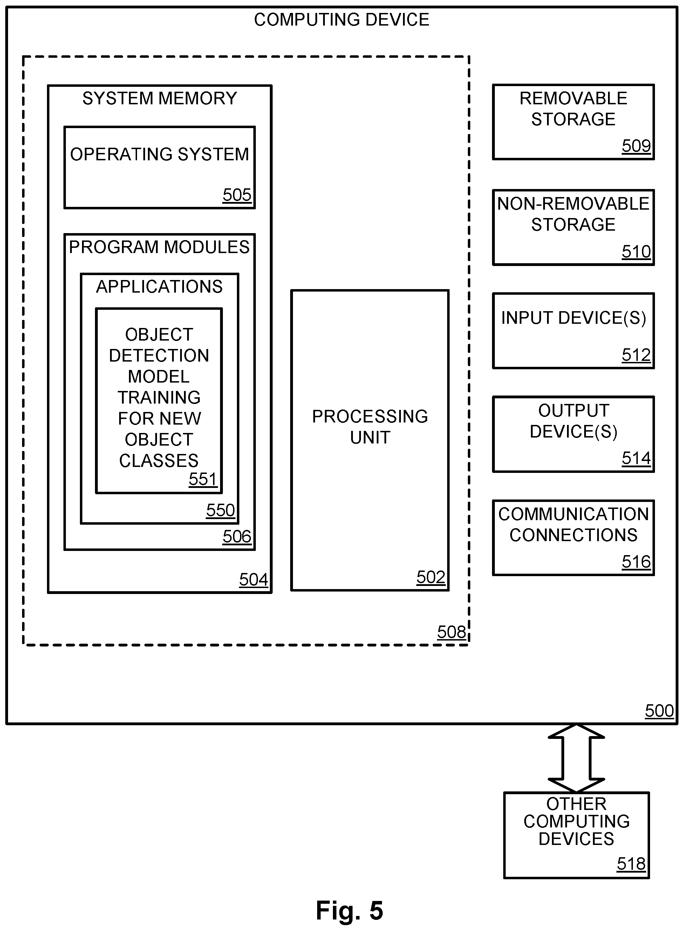

Fig. 5 depicts a block diagram illustrating physical components (i.e., hardware) of a computing device 500 with which examples of the present disclosure may be practiced. The computing device components described below may be suitable for a client device implementing the training of an existing object detection model for new classes, as discussed above. In a basic configuration, the computing device 500 may include at least one processing unit 502 and a system memory 504. The processing unit(s) (e.g., processors) may be referred to as a processing system. Depending on the configuration and type of computing device, the system memory 504 may include volatile storage (e.g., random access memory), non-volatile storage (e.g., read-only memory), flash memory, or any combination of such memories. The system memory 504 may include an operating system 505 and one or more program modules 506 suitable for running software applications 550, such as object detection model training for new object classes 551, to implement one or more of the systems or methods described above.

The operating system 505, for example, may be suitable for controlling the operation of the computing device 500. Furthermore, aspects of the invention may be practiced in conjunction with a graphics library, other operating systems, or any other application program and is not limited to any particular application or system. This basic configuration is illustrated in Fig. 5 by those components within a dashed line 508. The computing device 500 may have additional features or functionalities. For example, the computing device 500 may also include additional data storage devices (which may be removable and/or non-removable), such as, for example, magnetic disks, optical disks, or tape. Such additional storage is illustrated in Fig. 5 by a removable storage device(s) 509 and a non-removable storage device(s) 510.

As stated above, a number of program modules and data files may be stored in the system memory 504. While executing on the processing unit 502, the program modules 506 may perform processes including one or more of the operations of the method(s) as illustrated in Fig. 4, or one or more operations of the system(s) and/or apparatus(es) as described with respect to Figs. 1-3B, or the like. Other program modules that may be used in accordance with examples of the present disclosure may include applications such as electronic mail and contacts applications, word processing applications, spreadsheet applications, database applications, slide presentation applications, drawing or computer-aided application programs, AI applications and ML modules on cloud-based systems, etc.

Furthermore, examples of the present disclosure may be practiced in an electrical circuit including discrete electronic elements, packaged or integrated electronic chips containing logic gates, a circuit utilizing a microprocessor, or on a single chip containing electronic elements or microprocessors. For example, examples of the present disclosure may be practiced via a system-on-a-chip ("SOC") where each or many of the components illustrated in Fig. 5 may be integrated onto a single integrated circuit. Such an SOC device may include one or more processing units, graphics units, communications units, system virtualization units and various application functionalities all of which may be integrated (or "burned") onto the chip substrate as a single integrated circuit. When operating via an SOC, the functionality, described herein, with respect to generating suggested queries, may be operated via application-specific logic integrated with other components of the computing device 500 on the single integrated circuit (or chip). Examples of the present disclosure may also be practiced using other technologies capable of performing logical operations such as, for example, AND, OR, and NOT, including mechanical, optical, fluidic, and/or quantum technologies.

The computing device 500 may also have one or more input devices 512 such as a keyboard, a mouse, a pen, a sound input device, and/or a touch input device, etc. The output device(s) 514 such as a display, speakers, and/or a printer, etc. may also be included. The aforementioned devices are examples and others may be used. The computing device 500 may include one or more communication connections 516 allowing communications with other computing devices 518. Examples of suitable communication connections 516 include radio frequency ("RF") transmitter, receiver, and/or transceiver circuitry; universal serial bus ("USB"), parallel, and/or serial ports; and/or the like.

The term "computer readable media" as used herein may include computer storage media. Computer storage media may include volatile and nonvolatile, and/or removable and non-removable, media that may be implemented in any method or technology for storage of information, such as computer readable instructions, data structures, or program modules. The system memory 504, the removable storage device 509, and the non-removable storage device 510 are all computer storage media examples (i.e., memory storage). Computer storage media may include random access memory ("RAM"), read-only memory ("ROM"), electrically erasable programmable read-only memory ("EEPROM"), flash memory or other memory technology, compact disk read-only memory ("CD-ROM"), digital versatile disks ("DVD") or other optical storage, magnetic cassettes, magnetic tape, magnetic disk storage or other magnetic storage devices, or any other article of manufacture which can be used to store information and which can be accessed by the computing device 500. Any such computer storage media may be part of the computing device 500. Computer storage media may be non-transitory and tangible, and computer storage media do not include a carrier wave or other propagated data signal.

Communication media may be embodied by computer readable instructions, data structures, program modules, or other data in a modulated data signal, such as a carrier wave or other transport mechanism, and may include any information delivery media. The term "modulated data signal" may describe a signal that has one or more characteristics that are set or changed in such a manner as to encode information in the signal. By way of example, communication media may include wired media such as a wired network or direct-wired connection, and wireless media such as acoustic, RF, infrared, and other wireless media.

In this detailed description, wherever possible, the same reference numbers are used in the drawing and the detailed description to refer to the same or similar elements. In some instances, a sub-label is associated with a reference numeral to denote one of multiple similar components. When reference is made to a reference numeral without specification to an existing sub-label, it is intended to refer to all such multiple similar components. In some cases, for denoting a plurality of components, the suffixes "a" through "n" may be used, where n denotes any suitable non-negative integer number (unless it denotes the number 14, if there are components with reference numerals having suffixes "a" through "m" preceding the component with the reference numeral having a suffix "n"), and may be either the same or different from the suffix "n" for other components in the same or different figures. For example, for component #1 X05a-X05n, the integer value of $n$ in X05n may be the same or different from the integer value of $n$ in X10n for component #2 X10a-X10n, and so on. In other cases, other suffixes (e.g., $s, t, u, v, w, x, y,$ and/or $z$) may similarly denote non-negative integer numbers that (together with n or other like suffixes) may be either all the same as each other, all different from each other, or some combination of same and different (e.g., one set of two or more having the same values with the others having different values, a plurality of sets of two or more having the same value with the others having different values).

Unless otherwise indicated, all numbers used herein to express quantities, dimensions, and so forth used should be understood as being modified in all instances by the term "about." In this application, the use of the singular includes the plural unless specifically stated otherwise, and use of the terms "and" and "or" means "and/or" unless otherwise indicated. Moreover, the use of the term "including," as well as other forms, such as "includes" and "included," should be considered non-exclusive. Also, terms such as "element" or "component" encompass both elements and components including one unit and elements and components that include more than one unit, unless specifically stated otherwise.

In this detailed description, for the purposes of explanation, numerous specific details are set forth to provide a thorough understanding of the described embodiments. It will be apparent to one skilled in the art, however, that other embodiments of the present invention may be practiced without some of these specific details. In other instances, certain structures and devices are shown in block diagram form. While aspects of the technology may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the detailed description does not limit the technology, but instead, the proper scope of the technology is defined by the appended claims. Examples may take the form of a hardware implementation, or an entirely software implementation, or an implementation combining software and hardware aspects. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features. The detailed description is, therefore, not to be taken in a limiting sense.

Aspects of the present invention, for example, are described above with reference to block diagrams and/or operational illustrations of methods, systems, and computer program products according to aspects of the invention. The functions and/or acts noted in the blocks may occur out of the order as shown in any flowchart. For example, two blocks shown in succession may in fact be executed substantially concurrently or the blocks may sometimes be executed in the reverse order, depending upon the functionalities and/or acts involved. Further, as used herein and in the claims, the phrase "at least one of element A, element B, or element C" (or any suitable number of elements) is intended to convey any of: element A, element B, element C, elements A and B, elements A and C, elements B and C, and/or elements A, B, and C (and so on).

The description and illustration of one or more aspects provided in this application are not intended to limit or restrict the scope of the invention as claimed in any way. The aspects, examples, and details provided in this application are considered sufficient to convey possession and enable others to make and use the best mode of the claimed invention. The claimed invention should not be construed as being limited to any aspect, example, or detail provided in this application. Regardless of whether shown and described in combination or separately, the various features (both structural and methodological) are intended to be selectively rearranged, included, or omitted to produce an example or embodiment with a particular set of features. Having been provided with the description and illustration of the present application, one skilled in the art may envision variations, modifications, and alternate aspects, examples, and/or similar embodiments falling within the spirit of the broader aspects of the general inventive concept embodied in this application that do not depart from the broader scope of the claimed invention.

In an aspect, the technology relates to a system, comprising a processing system; and memory coupled to the processing system, the memory comprising computer executable instructions that, when executed by the processing system, causes the system to perform operations comprising: training an object detection model, which has been pre-trained with a first set of object classes, with a new object class, by: applying, to each of a plurality of first images that each depicts an object corresponding to an object class among the first set of object classes, a set of data augmentations combining each first image with at least one second image among a plurality of second images that each depicts a second object corresponding to the new object class, to generate a plurality of augmented images; and training the object detection model using the plurality of augmented images.

In an example, the set of data augmentations includes one of or a combination of two or more of: numerical representation similarity -based data augmentations; image insertion -based data augmentations; or image assemblage -based data augmentations.

In an example, applying the numerical representation similarity-based data comprises: selecting the at least one second image based on a similarity between a numerical representation of each of the at least one second image and a numerical representation of each first image, wherein each numerical representation is representative of at least one of color, texture, contrast, brightness, or pixel values; and combining each first image with at least one second image based on numerical representation-based selection of images to generate the plurality of augmented images.

In an example, applying the image insertion -based data augmentations comprises: retrieving a plurality of third images that depict the second object corresponding to the new object class, the plurality of third images including the plurality of second images; for each of the plurality of third images, modifying the third image to remove its background, leaving the second object depicted in the third image; and for each first image of the plurality of first images, selecting one of the modified third images for insertion in the first image based on a similarity between a numerical representation of the one of the modified third images and a numerical representation of the first image; identifying a background portion of the first image over which to insert the one of the modified third images; and inserting the one of the modified third images in the first image to overlay the identified background portion of the first image to generate one of the plurality of augmented images.

In an example, applying the image assemblage -based data augmentations comprises: for each first image of the plurality of first images, retrieving at least one fourth image among the plurality of second images based on a similarity between a numerical representation of each of the at least one fourth image and a numerical representation of the first image; and generating a fifth image as an image assemblage that combines the first image with the at least one fourth image.

In an example, retrieving at least one fourth image comprises: for each first image, generating a first prompt comprising the first image; providing the first prompt to a large language model ("LLM") -driven text-to-image retrieval system or an LLM-driven text-to-image generation system; and receiving, from the LLM-driven text-to-image retrieval system or the LLM-driven text-to-image generation system, the at least one fourth image.

In an example, training the object detection model includes retaining weights associated with the first set of object classes and randomizing weights of the new object class.

In an example, the object detection model has a general architecture including a backbone portion and a head portion, the backbone portion being configured to detect or identify general features in an image and to generate a numerical representation for each general feature, the head portion being configured to perform at least one of classification, confidence determination, or bounding box detection.

In an example, the operations further comprise: performing automatic labeling of images including at least one of the plurality of first images or the plurality of second images, by: for each object class for each image, applying a second object detection model to the image to detect and to label an object corresponding to the object class; cropping the image, leaving the object depicted in the image; using a classifier model to detect and to label an object in the cropped image; determining whether labels by the second object detection model and by the classifier model agree; and performing one of: based on a determination that the labels by the second object detection model and by the classifier model agree within a natural language tolerance, adding the label to the image; or based on a determination that the labels by the second object detection model and by the classifier model do not agree within the natural language tolerance, identifying adversarial image examples for the object class.

In an example, the classifier model comprises one of: a contrastive language-image - based model that is trained on a large-scale dataset containing images and their corresponding textual descriptions and that is configured to handle classification of a closed set of classes; or a classification model that is finetuned on crops of a labeled dataset of objects.

In an aspect, a computer-implemented method, comprising: training an object detection model, which has been pre-trained with a first set of object classes, with a new object class, by: applying, to each of a plurality of first images that each depicts an object corresponding to an object class among the first set of object classes, data augmentations combining each first image with at least one second image among a plurality of second images that each depicts a second object corresponding to the new object class, to generate a plurality of augmented images; and training the object detection model using the plurality of augmented images.

In an example, the method further comprises: performing automatic labeling of images including at least one of the plurality of first images or the plurality of second images, by: for each object class for each image, applying a second object detection model to the image to detect and to label an object corresponding to the object class; cropping the image, leaving the object depicted in the image; using a classifier model to detect and to label an object in the cropped image; determining whether labels by the second object detection model and by the classifier model agree; and performing one of: based on a determination that the labels by the second object detection model and by the classifier model agree within a natural language tolerance, adding the label to the image; or based on a determination that the labels by the second object detection model and by the classifier model do not agree within the natural language tolerance, identifying adversarial image examples for the object class.

In an example, the classifier model comprises one of: a contrastive language-image - based model that is trained on a large-scale dataset containing images and their corresponding textual descriptions and that is configured to handle classification of a closed set of classes; or a classification model that is finetuned on crops of a labeled dataset of objects.

In an example, applying the data augmentations comprises: selecting the at least one second image based on a similarity between a numerical representation of each of the at least one second image and a numerical representation of each first image, wherein each numerical representation is representative of at least one of color, texture, contrast, brightness, or pixel values; and combining each first image with at least one second image based on numerical representation-based selection of images to generate the plurality of augmented images.

In an example, applying the data augmentations further comprises: retrieving a plurality of third images that depict the second object corresponding to the new object class, the plurality of third images including the plurality of second images; for each of the plurality of third images, modifying the third image to remove its background, leaving the second object depicted in the third image; and for each first image of the plurality of first images, selecting one of the modified third images for insertion in the first image based on a similarity between a numerical representation of the one of the modified third images and a numerical representation of the first image; identifying a background portion of the first image over which to insert the one of the modified third images; and inserting the one of the modified third images in the first image to overlay the identified background portion of the first image to generate one of the plurality of augmented images.

In an example, applying the data augmentations further comprises: for each first image of the plurality of first images, retrieving at least one fourth image among the plurality of second images based on a similarity between a numerical representation of each of the at least one fourth image and a numerical representation of the first image; and generating a fifth image as an image assemblage that combines the first image with the at least one fourth image.

In an example, retrieving at least one fourth image comprises: for each first image, generating a first prompt comprising the first image; providing the first prompt to a large language model ("LLM") -driven text-to-image retrieval system or an LLM-driven text-to-image generation system; and receiving, from the LLM-driven text-to-image retrieval system or the LLM-driven text-to-image generation system, the at least one fourth image.

In an example, training the object detection model includes retaining weights associated with the first set of object classes and randomizing weights of the new object class.

In an example, the object detection model has a general architecture including a backbone portion and a head portion, the backbone portion being configured to detect or identify general features in an image and to generate a numerical representation for each general feature, the head portion being configured to perform at least one of classification, confidence determination, or bounding box detection.

In an example, training the object detection model includes training at least the backbone using an adapter that freezes pre-trained weights corresponding to the first set of object classes and stores additional weight changes corresponding to the new object class in a matrix.

**Claims**

**1.** A system (100), comprising:

a processing system (502); and

memory (504) coupled to the processing system, the memory comprising computer executable instructions that, when executed by the processing system, causes the system to perform operations comprising:

training (410) an object detection model, which has been pre-trained with a first set of object classes, with a new object class, by:

applying (415), to each of a plurality of first images that each depicts an object corresponding to an object class among the first set of object classes, a set of data augmentations combining each first image with at least one second image among a plurality of second images that each depicts a second object corresponding to the new object class, to generate a plurality of augmented images; and

training (420) the object detection model using the plurality of augmented images.

2. The system of claim 1, wherein the set of data augmentations includes one of or a combination of two or more of:

numerical representation similarity -based data augmentations;

image insertion -based data augmentations; or

image assemblage -based data augmentations.

3. The system of claim 2, wherein applying the numerical representation similarity -based data augmentations comprises:

selecting the at least one second image based on a similarity between a numerical representation of each of the at least one second image and a numerical representation of each first image, wherein each numerical representation is representative of at least one of color, texture, contrast, brightness, or pixel values; and

combining each first image with at least one second image based on numerical representation-based selection of images to generate the plurality of augmented images.

4. The system of claim 2, wherein applying the image insertion -based data augmentations comprises:

retrieving a plurality of third images that depict the second object corresponding to the new object class, the plurality of third images including the plurality of second images;

for each of the plurality of third images, modifying the third image to remove its background, leaving the second object depicted in the third image; and

for each first image of the plurality of first images,

selecting one of the modified third images for insertion in the first image based on a similarity between a numerical representation of the one of the modified third images and a numerical representation of the first image;

identifying a background portion of the first image over which to insert the one of the modified third images; and

inserting the one of the modified third images in the first image to overlay the identified background portion of the first image to generate one of the plurality of augmented images.

5. The system of claim 2, wherein applying the image assemblage -based data augmentations comprises: for each first image of the plurality of first images,

retrieving at least one fourth image among the plurality of second images based on a similarity between a numerical representation of each of the at least one fourth image and a numerical representation of the first image; and

generating a fifth image as an image assemblage that combines the first image with the at least one fourth image.

6. The system of claim 5, wherein retrieving at least one fourth image comprises: for each first image,

generating a first prompt comprising the first image;

providing the first prompt to a large language model ("LLM") -driven text-to-image retrieval system or an LLM-driven text-to-image generation system; and

receiving, from the LLM-driven text-to-image retrieval system or the LLM-driven text-to-image generation system, the at least one fourth image.

7. The system of claim 1, wherein training the object detection model includes retaining weights associated with the first set of object classes and randomizing weights of the new object class.

8. The system of claim 1, wherein the object detection model has a general architecture including a backbone portion and a head portion, the backbone portion being configured to detect or identify general features in an image and to generate a numerical representation for each general feature, the head portion being configured to perform at least one of classification, confidence determination, or bounding box detection.

9. The system of claim 1, wherein the operations further comprise:
performing automatic labeling of images including at least one of the plurality of first images or the plurality of second images, by:
for each object class for each image,

applying a second object detection model to the image to detect and to label an object corresponding to the object class;
cropping the image, leaving the object depicted in the image;
using a classifier model to detect and to label an object in the cropped image;
determining whether labels by the second object detection model and by the classifier model agree; and
performing one of:
based on a determination that the labels by the second object

detection model and by the classifier model agree within a natural language tolerance, adding the label to the image; or based on a determination that the labels by the second object
detection model and by the classifier model do not agree within the natural language tolerance, identifying adversarial image examples for the object class.

10. The system of claim 9, wherein the classifier model comprises one of:

a contrastive language-image -based model that is trained on a large-scale dataset containing images and their corresponding textual descriptions and that is configured to handle classification of a closed set of classes; or
a classification model that is finetuned on crops of a labeled dataset of objects.

11. A computer-implemented method (400), comprising:
training (410) an object detection model, which has been pre-trained with a first set of object classes, with a new object class, by:

applying (415), to each of a plurality of first images that each depicts an object corresponding to an object class among the first set of object classes, data augmentations combining each first image with at least one second image among a plurality of second images that each depicts a second object corresponding to the new object class, to generate a plurality of augmented images; and
training (420) the object detection model using the plurality of augmented images.

12. The computer-implemented method of claim 11, further comprising:
performing automatic labeling of images including at least one of the plurality of first images or the plurality of second images, by:
for each object class for each image,

applying a second object detection model to the image to detect and to label an object corresponding to the object class;
cropping the image, leaving the object depicted in the image;
using a classifier model to detect and to label an object in the cropped image;
determining whether labels by the second object detection model and by the classifier model agree; and
performing one of:

based on a determination that the labels by the second object
detection model and by the classifier model agree within a natural language tolerance, adding the label to the image; or
based on a determination that the labels by the second object

detection model and by the classifier model do not agree within the natural language tolerance, identifying adversarial image examples for the object class.

13. The computer-implemented method of claim 12, wherein the classifier model comprises one of:

a contrastive language-image -based model that is trained on a large-scale dataset containing images and their corresponding textual descriptions and that is configured to handle classification of a closed set of classes; or
a classification model that is finetuned on crops of a labeled dataset of objects.

14. The computer-implemented method of claim 11, wherein applying the data augmentations comprises:

selecting the at least one second image based on a similarity between a numerical representation of each of the at least one second image and a numerical representation of each first image, wherein each numerical representation is representative of at least one of color, texture, contrast, brightness, or pixel values; and
combining each first image with at least one second image based on numerical representation-based selection of images to generate the plurality of augmented images.

15. The computer-implemented method of claim 11, wherein applying the data augmentations further comprises:

retrieving a plurality of third images that depict the second object corresponding to the new object class, the plurality of third images including the plurality of second images;
for each of the plurality of third images, modifying the third image to remove its background, leaving the second object depicted in the third image; and
for each first image of the plurality of first images,

selecting one of the modified third images for insertion in the first image based on a similarity between a numerical representation of the one of the modified third images and a numerical representation of the first image;
identifying a background portion of the first image over which to insert the one of the modified third images; and
inserting the one of the modified third images in the first image to overlay the identified background portion of the first image to generate one of the plurality of augmented images.

Fig. 1

EP 4 625 353 A1

## Automatic Labeling

Fig. 2A

200A

# Automatic Labeling

*250*

### Agree

*OD Model Class: A photo of a clock*
*Classifier Class: Clock*
*OD Model Score: 0.689926*
*Classifier Score: 0.230225*
*Annotation ID: 256*

200B **Fig. 2B**

*255*

### Disagree

*OD Model Class: A photo of a handbag*
*Classifier Class: Tie*
*OD Model Score: 0.298898*
*Classifier Score: 0.275879*
*Annotation ID: 271*

200C **Fig. 2C**

EP 4 625 353 A1

# Data Augmentation (Image Insertion)

```
┌────────────────────────────┐
│ Retrieve 1ˢᵗ Images Depicting │
│  1ˢᵗ Object and 2ⁿᵈ Images  │
│   Depicting 2ⁿᵈ Object  305 │
└────────────────────────────┘
              │
              ▼
```

For each
2ⁿᵈ Image

```
┌────────────────────────────┐
│    Modify the 2ⁿᵈ Image to  │
│  Remove its Background,     │
│    Leaving 2ⁿᵈ Object  310  │
└────────────────────────────┘
              │
              ▼
```

For each
1ˢᵗ Image

```
┌────────────────────────────┐
│  Select one of the modified 2ⁿᵈ │
│  Images for Insertion in the 1ˢᵗ │
│         Image        315    │
└────────────────────────────┘
              │
              ▼
┌────────────────────────────┐
│ Identify a Background Portion │
│  of the 1ˢᵗ Image Over Which │
│   to Insert the one of the  │
│  modified 2ⁿᵈ Images  320   │
└────────────────────────────┘
              │
              ▼
┌────────────────────────────┐
│  Insert the one of the modified │
│  2ⁿᵈ Images in the 1ˢᵗ Image to │
│    Generated Augmented      │
│         Image        325    │
└────────────────────────────┘
```

330

335

340

**Fig. 3A**

300A

EP 4 625 353 A1

# Data Augmentation (Image Assemblage)

Query:

350

355

Results:

360

365

355

370

370

375

Retrieve 4th Image(s) Based on Similarity of Numerical Representation with 3rd Image      380

Generate 5th Image as an Image Assemblage Combining 3rd Image with 4th Image(s)      385

*For each 3rd Image*

390

365

355

370

375

**Fig. 3B**

300B

Perform automatic labeling of images

405

Train an object detection model, which has been pre-trained with a first set of object classes, with a new object class

410

Apply, to each of a plurality of first images that each depicts an object corresponding to an object class among the first set of object classes, a set of data augmentations combining each first image with at least one second image among a plurality of second images that each depicts a second object corresponding to the new object class, to generate a plurality of augmented images

415

Train the object detection model using the plurality of augmented images

420

400

**Fig. 4A**

Receive an image

425

Perform automatic labeling of the image

430

Perform object detection on the image, using the trained object detection model, to detect whether objects in either the first set of object classes or the new object class(es) are present in the image

435

Output results of object detection

440

Finetune the object detection model with another new object class

445

Perform automatic labeling of images

450

Train the object detection model with the other new object class

455

400

**Fig. 4B**

COMPUTING DEVICE

SYSTEM MEMORY

OPERATING SYSTEM

505

PROGRAM MODULES

APPLICATIONS

OBJECT
DETECTION
MODEL
TRAINING
FOR NEW
OBJECT
CLASSES

551

550

506

504

PROCESSING
UNIT

502

508

REMOVABLE
STORAGE

509

NON-REMOVABLE
STORAGE

510

INPUT DEVICE(S)

512

OUTPUT
DEVICE(S)

514

COMMUNICATION
CONNECTIONS

516

500

OTHER
COMPUTING
DEVICES

518

**Fig. 5**

Europäisches
Patentamt

European
Patent Office

Office européen
des brevets

# EUROPEAN SEARCH REPORT

Application Number

EP 25 16 2718

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHENG MENG ET AL: "Meta-Learning-Based Incremental Few-Shot Object Detection", IEEE TRANSACTIONS ON CIRCUITS AND SYSTEMS FOR VIDEO TECHNOLOGY, IEEE, USA, vol. 32, no. 4, 11 June 2021 (2021-06-11), pages 2158-2169, XP011905484, ISSN: 1051-8215, DOI: 10.1109/TCSVT.2021.3088545 [retrieved on 2021-06-11] | 1-8,11, 14,15 | INV. G06V10/764 G06V10/774 G06V10/25 G06V10/46 G06V10/50 G06V10/74 G06V10/82 |
| A | * Section I.; page 2159 * * page 2160; figure 1 * * Section III.C.2; page 2161 * * page 2162; figure 2 * * Section III.B.; page 2160 * * Section III.C.3; page 2163 * * Section IV.B.; page 2163 * | 9,10,12, 13 | |
| | ----- | | **TECHNICAL FIELDS SEARCHED (IPC)** |
| Y | YUNHAO GE ET AL: "DALL-E for Detection: Language-driven Context Image Synthesis for Object Detection", ARXIV.ORG, CORNELL UNIVERSITY LIBRARY, 201 OLIN LIBRARY CORNELL UNIVERSITY ITHACA, NY 14853, 20 June 2022 (2022-06-20), XP091254609, | 1-8,11, 14,15 | G06V |
| A | * Section 3.; page 5 * * Section 3.1.; page 5 - page 6 * * page 7; figure 2 * * Section 4.1; page 10 * | 9,10,12, 13 | |
| | ----- | | |
| | -/-- | | |

The present search report has been drawn up for all claims

| Place of search | Date of completion of the search | Examiner |
|---|---|---|
| The Hague | 30 April 2025 | Gissot, Samuel |

EPO FORM 1503 03.82 (P04C01)

Europäisches
Patentamt

European
Patent Office

Office européen
des brevets

# EUROPEAN SEARCH REPORT

**Application Number**

EP 25 16 2718

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GHIASI GOLNAZ ET AL: "Simple Copy-Paste is a Strong Data Augmentation Method for Instance Segmentation", 2021 IEEE/CVF CONFERENCE ON COMPUTER VISION AND PATTERN RECOGNITION (CVPR), IEEE, 20 June 2021 (2021-06-20), pages 2917-2927, XP034008003, DOI: 10.1109/CVPR46437.2021.00294 [retrieved on 2021-10-15] * Section 2.; the whole document * * Section 3.; page 2919 - page 2920 * * Section 4.1.; page 2920 * * Section 4.4.; page 2922 * * page 2918; figure 2 * ----- | 1-15 | |

**TECHNICAL FIELDS SEARCHED (IPC)**

The present search report has been drawn up for all claims

| Place of search | Date of completion of the search | Examiner |
|---|---|---|
| The Hague | 30 April 2025 | Gissot, Samuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63571404, Yonit Hoffman